Europäisches Patentamt

European Patent Office

Office européen des brevets

(11) Numéro de publication: **0 408 406 A1**

## DEMANDE DE BREVET EUROPEEN

(21) Numéro de dépôt: 90401678.9

(22) Date de dépôt: 15.06.90

(51) Int. Cl.5: **H01S  3/30**, G02F 1/39

(30) Priorité: 11.07.89 FR 8909303

(43) Date de publication de la demande:
16.01.91 Bulletin  91/03

(84) Etats contractants désignés:
DE GB IT

(71) Demandeur: THOMSON-CSF
51, Esplanade du Général de Gaulle
F-92800 Puteaux(FR)

(72) Inventeur: Pocholle, Jean-Paul

THOMSON-CSF, SCPI, Cédex 67
F-92045 Paris La Défense(FR)
Inventeur: Papuchon, Michel
THOMSON-CSF, SCPI, Cédex 67
F-92045 Paris La Défense(FR)
Inventeur: Puech, Claude
THOMSON-CSF, SCPI, Cédex 67
F-92045 Paris La Défense(FR)

(74) Mandataire: Guérin, Michel et al
THOMSON-CSF SCPI
F-92045 PARIS LA DEFENSE CEDEX 67(FR)

(54) **Source laser de puissance accordable.**

(57) Source laser de puissance accordable comportant une source laser 1 émettant un faisceau de
pompe vers une cellule RAMAN 2. Elle transmet, à
un cristal non-linéaire (3), un faisceau à une longueur d'onde de Stokes.
    Selon l'angle de ce faisceau par rapport à l'axe
optique du cristal (3), le cristal non linéaire transmet
deux ondes de sortie (Fs, Fi) à des longueurs d'ondes différentes de la longueur d'onde de Stokes.
    **APPLICATION : LASER DE PUISSANCE AC-
CORDABLE EN FREQUENCE**

## FIG_1

# SOURCE LASER DE PUISSANCE ACCORDABLE

L'invention concerne une source laser de puissance accordable et notamment une source laser de puissance émettant à une longueur d'onde non dangereuse pour l'oeil humain.

Le domaine couvert par la présente invention concerne la réalisation de sources lasers de puissance travaillant dans une gamme située entre 1,54 μm et 10 μm.

Le choix de la longueur d'onde d'émission dans un domaine spectral situé dans une gamme supérieure à 1,5 μm est lié au fait que les risques de dommages optiques oculaires sont minimisés et, qu'à cette longueur d'onde, l'atmosphère présente une bonne fenêtre de transmission. Rappelons que l'exposition maximale admissible au niveau de l'oeil humain est de 5 μJ/cm² à 1,064 μm et passe à 1 J/cm² à 1,54 μm. Il s'ensuit que la réalisation de sources lasers de puissance dans ce domaine spectral présente des avantages indéniables.

Cependant il n'existe pas de matériaux de matrices et de terres rares présentant des transmissions lasers exploitables, hormis l'ion Erbium.

L'inconvénient lié à l'emploi de cette terre rare est que le fonctionnement laser est décrit par un système à trois niveaux, ce qui présente quelques inconvénients (seuil élevé, la transition laser se superpose à une bande d'absorption, saturation du gain plus facile, etc ....).

Une autre voie consiste à réaliser par transfert Raman une telle source. Dans ce cas, on utilise un laser Nd : YAG (laser YAG ou Néodyme) qui vient pomper une cellule dans laquelle se trouve un gaz qui présente un décalage en fréquence Raman autorisant le transfert de l'onde de pompe situé à 1,064 m vers 1,54 μm. Un tel gaz peut être du méthane (CH₄) sous haute pression.

Ce gaz présente un décalage spectral Raman de 2916 cm⁻¹ et un coefficient d gain Raman de l'ordre de 1,4 cm/ GW sous une pression de 10 atmosphères.

On trouvera une description de telles sources utilisant l'effet Raman dans les articles suivants :
- "A High Power, Short Pulse Stimulated Raman Source at 1,54 μ m" de DC. HANNA publié dans Optics Communication, volume 60, numéro 3 du 1er novembre 1960 ;
- "Stimulated Raman Scattering of Picosecond Light Pulses in Hydrogen, Denterium and Methane" de DC. HANNA et al. publié dans IEEE Jounal of Quantum Electronics volume QE -22, numéro 2 de février 1986 ;
- "Measurement of Raman Gain Coefficients of Hydrogen, Denterium and Methane" de JJ. OTTUSCH et al. publié dans IEEE Journal of Quantum Electronics, volume 24, numéro 10, d'octobre 1988.

Ainsi, avec un pompage centré sur la longueur d'onde d'émission du laser Nd : YAG, il est possible de générer une émission à la longueur d'onde Stokes

$$\lambda_R = \frac{2\pi\mathbb{C}}{\omega R}$$

obtenue à partir de la relation :
$W_R = W_p - \Delta W_R$
$W_p$, $\Delta W_R$, $W_R$ étant respectivement la fréquence angulaire pompe, le décalage de fréquence Raman et la fréquence de l'onde Stokes. En longueur d'onde et pour un décalage Raman donné en cm⁻¹, on obtient :
$\lambda_R = (1/\overset{\lambda}{\rho}(cm) - 2916\ cm^{-1})^{-1}$

Cependant, une telle source ne permet pas d'accorder l'onde émise à une longueur d'onde déterminée.

L'invention met donc en application une telle source et fournit des moyens permettant de rendre accordable une telle source.

L'invention concerne donc une source laser de puissance caractérisée en ce qu'elle comporte :
- une source laser de pompe émettant une onde de pompe optique (Fp) d'une première longueur d'onde déterminée ;
- une cellule à gaz sous pression contenant un gaz de nature telle que, recevant l'onde de pompe (Fp), la cellule émet une onde Stokes (F_R) à une deuxième longueur d'onde différente de la première longueur d'onde ;
- un cristal non linéaire recevant l'onde Stokes (F_R) sous un angle déterminé par rapport à l'axe optique du cristal qui fournit en échange deux ondes de sortie (F_s, F_i) de longueurs d'ondes différentes de la deuxième longueur d'onde.

Les différents objets et caractéristiques de l'invention apparaîtront plus clairement à l'aide de la description qui va suivre faite en se reportant aux figures annexées qui représentent :
- la figure 1, un premier exemple de réalisation du dispositif de l'invention ;
- les figures 2 et 3, des diagrammes des longueurs d'ondes obtenues en fonction de l'inclinaison du faisceau d'entrée par rapport à l'axe optique du cristal ;
- les figures 4 et 5, des exemples de réalisation de variantes du dispositif de l'invention.

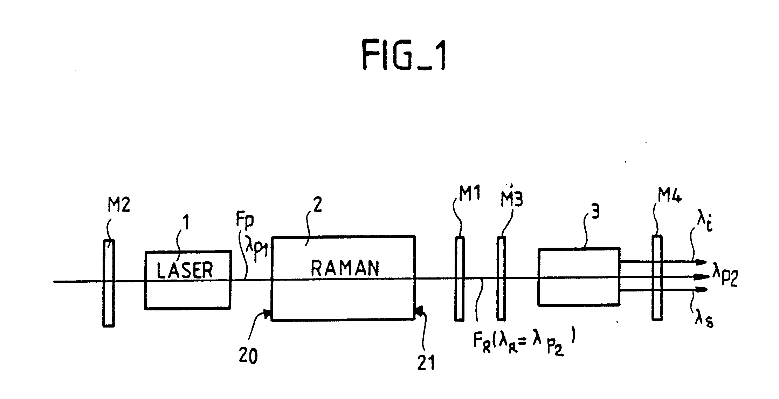

En se reportant à la figure 1, on va tout d'abord décrire un premier exemple de réalisation du dispositif laser de puissance selon l'invention.

Le dispositif de la figure 1 comporte principalement :
- un barreau laser à cavité externe 1 émettant un faisceau de pompe $F_p$ à une longueur d'onde $\lambda_p$ déterminée ;
- une cellule à gaz sous pression 2 recevant le faisceau de pompe $F_p$ et dont le gaz est excité par ce faisceau de telle façon qu'il émette par effet Raman, un faisceau $F_R$ avec un décalage en fréquence et qu'il y ait un transfert d'énergie du faisceau de pompe $F_p$ vers le faisceau $F_R$ ;
- deux miroirs M1 et M2, situés de part et d'autre du laser 1 et de la cellule 2, constituent une cavité optique ;
- un cristal 3 compris dans une cavité optique constituée de deux miroirs M3 et M4, recevant l'onde Raman $F_R$ et émettant deux ondes $F_i$ et $F_s$ à des longueurs d'ondes $\lambda_i$ et $\lambda_s$.

Le laser 1 est un laser de puissance émettant à une longueur d'onde $\lambda_p$ dangereuse pour l'oeil humain. Ce type de laser est courant dans la technique en raison des fortes puissances qu'il est susceptible d'émettre. Par exemple, il s'agit d'un laser YAG au Néodyme (Nd : YAG) émettent à une longueur d'onde $\lambda_p$ = 1,064 micromètres.

La cellule de gaz sous pression 2 contient un gaz tel que du méthane ($CH_4$) permettant d'obtenir, à partir d'un faisceau de pompe $F_p$ de longueur d'onde $\lambda_p$ = 1,064 micromètres, un faisceau $F_R$ de longueur d'onde $\lambda_R$ = 1,54 micromètres.

Le faisceau de pompe $F_p$ pénètre dans la cellule à gaz 2 par une face transparente 20 de la cellule à gaz 2. Il parcoure la cellule 2 selon un axe principal de la cellule et ressort par une face transparente 21 opposée à la face 20. Le faisceau $F_R$ sortant de la cellule 2 atteint le miroir M1 où il se réfléchit et retourne en sens inverse vers le miroir M2. Ainsi, la cavité réalisée par les miroirs M1 et M2 permet de bénéficier de la forte densité de puissance intra-cavité et, par le multi-passage dans la cavité, d'obtenir une efficacité de conversion de l'onde de pompe vers l'onde Stokes. Cependant, le laser 1 pourrait être également à cavité intrinsèque.

Dans la cellule à gaz sous pression, le processus d'évolution de l'onde Raman peut être représenté par la relation ;

$$P_R = P_R^0 \exp(-a_R{}^* L + g_R{}^* P_p^0/A_{eff}{}^* L_{eff}) \quad (1)$$

valable en régime de faible conversion et correspondant au cas où le processus non linéaire se met en place. Les différents paramètres représentent :

$a_R$ : coefficient d'absorption à $W_R$
L : distance de propagation dans la cellule à gaz 2
$g_R$ : coefficient de gain Raman du milieu gazeux de la cellule
$P_p0$ : puissance de pompe incidente dans la cellule
$A_{eff}$ : longueur effective de l'intéraction non linéaire prenant en compte les pertes à la longueur d'onde de pompe

$P_R$ : la puissance de l'onde Stokes (onde Raman) en fonction de la distance de propagation dans la cellule Raman.

$P_R0$ représente dans ce cas la puissance incidente initiant le processus non linéaire.

En l'absence de faisceau de commande injecté à la longueur d'onde Stokes, le mécanisme de transfert est engendré à partir du bruit dans la cavité et par amplification des photons Stokes de la cavité.

Le cristal 3 possède un axe optique et reçoit le faisceau Raman $F_R$ selon une direction faisant un angle avec cet axe optique. On obtient alors un processus non linéaire du second ordre dans le cristal. L'onde Raman $F_R$ est employée comme onde de pompe dans un montage de type oscillateur paramétrique.

A titre d'exemple, le domaine d'accord de phase peut être étendu à partir d'un tel schéma en utilisant un cristal de sélénogallate d'argent ($AgGaSe_2$) et une onde de pompe issue de l'effet Raman. En particulier, l'emploi d'un laser Nd : YAG pompant une cellule Raman à base de $CH_4$ permet d'obtenir une source accordable entre 1,8 et 10 $\mu m$. Le décalage Raman de l'onde d'émission se fait de 1,06415 $\mu m$ à 1,543169 $\mu m$ ; cette composante spectrale d'émission Raman stimulée étant obtenue en focalisant l'onde laser de pompe dans la cellule Raman comportant deux réflecteurs permettant de travailler en multiples réflexions.

L'onde Raman ainsi créée est ensuite focalisée dans une cavité optique contenant le cristal non linéaire. En fonction de l'angle d'attaque du faisceau de pompe (Raman) par rapport à l'axe optique du cristal, il est possible d'obtenir deux ondes ($F_s$ et $F_i$ (signal et "idler") qui satisfont aux conditions d'accord de phase :

$K_R - K_s - K_i = 0$

$K_i$ représentent les vecteurs d'ondes propres à chacun des champs présents dans le milieu non linéaire.

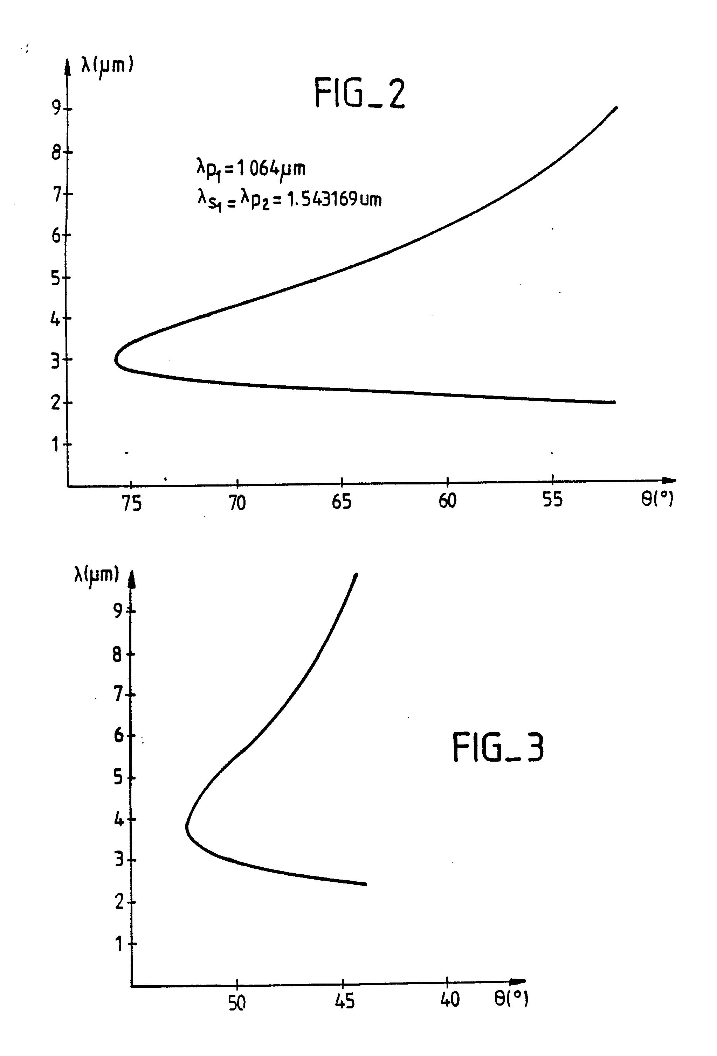

Sur les figures 2 et 3 sont représentées des domaines spectraux couverts par des sources composés de types différents.

La figure 2 représente un diagramme d'émission d'une source laser à base de grenat d'Yttrium dopé Néodyme (Nd : YAG) suivie d'une cellule Raman contenant du méthane sous pression puis d'un cristal à effet paramètrique à base de $AgGaSe_2$. Sur ce diagramme, on voit qu'en fonction de l'orientation du faisceau $F_R$ par rapport à l'axe optique du cristal 3, les longueurs d'onde $\lambda_i$ et $\lambda_s$ des faisceaux $F_i$ et $F_s$ peuvent être réglées pour l'une dans une plage située entre 1,5 $\mu m$ et 3 $\mu m$ environ, et pour l'autre entre 3 $\mu m$ et 10 $\mu m$ environ. Les plages de longueurs d'ondes sont obtenues pour un angle d'inclinaison $\theta$ du faisceau $F_R$ par rapport à l'axe optique du cristal compris entre 50 et 75°,

La figure 3 représente un diagramme d'émission d'une source laser à base de grenat d'Yttrium dopé Néodyme (Nd : YAG) suivie d'une cellule Raman contenant de l'hydrogène sous pression puis d'un cristal à effet paramétrique AgGaSe₂.

Selon ce diagramme, les plages de longueurs d'ondes obtenues pour les faisceaux $F_i$ et $F_s$ sont sensiblement identiques à celles du diagramme de la figure 2. Cependant cela est obtenu, dans ce diagramme de la figure 3, pour un angle 0 compris entre 45° et 52° environ.

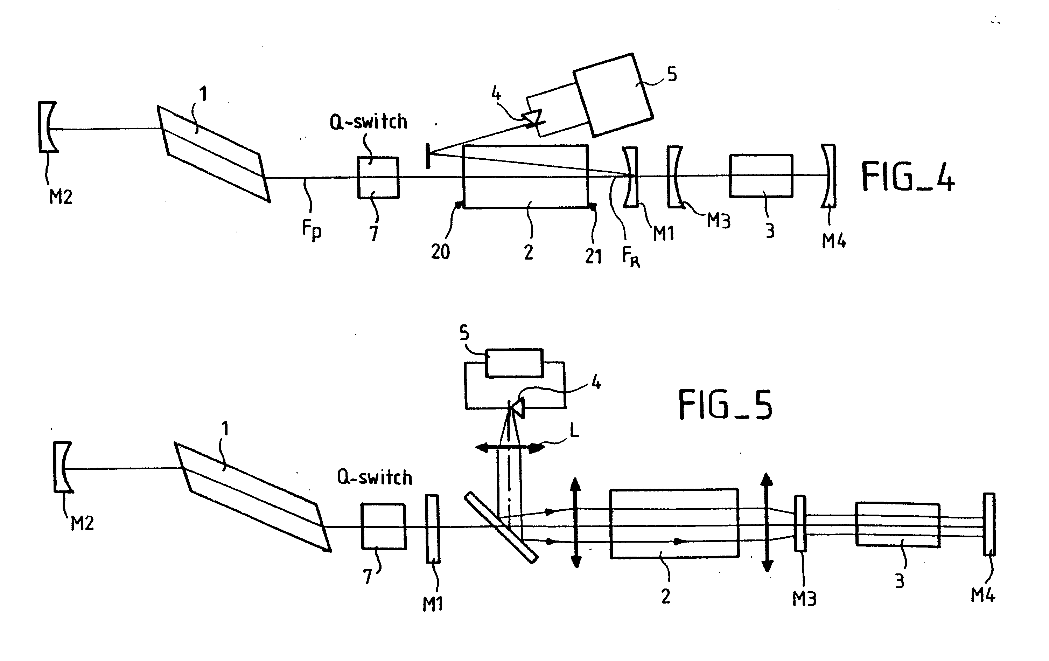

En se reportant à la figure 4, on va maintenant décrire une variante de réalisation de laser de puissance de l'invention.

Selon cette variante on prévoit d'accroître la puissance des faisceaux $F_i$ et $F_s$ émis.

Pour cela on prévoit une source lumineuse de commande telle qu'une diode laser de commande 4 commandée par un circuit 5 et émettant vers la cellule à gaz 2, un faisceau de commande $F_c$ à une longueur d'onde sensiblement égale à celle du faisceau $F_R$. Le faisceau de commande $F_c$ et le faisceau de pompe $F_p$ pénètrent dans la cellule à gaz 2 de façon sensiblement colinéaire.

Le faisceau de commande $F_c$ permet de commander le processus de transfert d'énergie de l'onde de pompe $F_p$ vers l'onde Raman $F_R$ en raison des valeurs sensiblement égales des longueurs d'ondes des faisceaux de commande $F_c$ et de l'onde Raman $F_R$.

Le système de la figure 3 permet ainsi d'obtenir en sortie du cristal 3 des ondes $F_i$ et $F_s$ accordables en longueurs d'ondes et de puissances importantes.

La figure 5 représente une deuxième variante de réalisation de l'invention dans lequel la cavité optique délimitée par les miroirs M1 et M2 contient le laser 1 mais ne contient pas la cellule à gaz 2, celle-ci se trouve sur le chemin du faisceau de pompe $F_p$ mais à l'extérieur de la cavité optique et l'amplification Raman dans la cellule à gaz 2 est donc réalisée à l'extérieur de la cavité laser.

Cette disposition permet de rendre le faisceau de commande $F_c$ strictement colinéaire avec le faisceau de pompe $F_p$ sans avoir à craindre un retour optique sur la diode laser 4, ce qui pourrait être le cas dans le dispositif de la figure 4 si les faisceaux de commande $F_c$ et de pompe $F_p$ étaient strictement colinéaires.

La superposition du faisceau de commande $F_c$ et du faisceau de pompe $F_p$ peut se faire, comme cela est représenté sur la figure 5, à l'aide d'une lame séparatrice disposée sur les trajets des faisceaux de pompe $F_p$ et de commande $F_c$ et convenablement orientée par rapport à ces faisceaux.

La configuration du système de la figure 5 se compose donc d'un laser de pompe et d'une cellule Raman permettant de générer une onde optique translatée en fréquence. Cette onde Raman commandée par l'intermédiaire d'un laser auxiliaire permettant d'initier le processus Raman. Bien que cela ne soit pas représenté sur la figure, le laser de commande peut être un laser solide pompé par l'intermédiaire de diodes lasers. Une telle source présente l'avantage de pouvoir être modulée à relativement haute cadence tout en conservant une configuration de mode stable (spatialement et temporellement). Le laser de pompe est un laser de puissance (YAG dopé $Nd^{3+}$ ou YLF dopé Holmium par exemple). Le faisceau de celui-ci vient pomper une cellule à gaz dans laquelle se trouve un gaz sous pression permettant de réaliser l'opération de translation de fréquence à partir du processus de diffusion inélastique de type Raman. En fonction du gaz, le décalage Raman peut être plus ou moins élevé. Dans notre cas, l'emploi d'un laser Nd : YAG travaillant en mode déclenché à 1,06415 $\mu$m permet de générer les longueurs d'ondes suivantes en fonction de la nature du gaz :

$H_2$ : $\lambda_R$ = 1,907606 $\mu$m
$D_2$ : $\lambda_R$ = 1,560021 $\mu$m
$CH_4$ : $\lambda_R$ = 1,543169 $\mu$m

De telles opérations sont bien connues, en particulier pour le méthane. Par contre, il est possible d'accroître l'emploi de telles sources dans d'autres domaines spectraux en utilisant d'autres sources pour le pompage réalisées à partir de matrice et de terres rares variées.

Quelques exemples sont mentionnés ci-après. On utilise un laser de pompe dont l'ion terre rare et l'effet de matrice permettent d'obtenir une transition laser à la longueur d'onde $\lambda_p$. Ce laser de puissance est coulé à une cellule Raman remplie par un gaz engendrant par l'intermédiaire de l'effet Raman, une translation de fréquence de l'onde de pompe. On obtient ainsi la longueur d'onde $\lambda_R$. Le processus Raman peut être déclenché par l'injection d'un faisceau de commande. Il est nécessaire pour cela que la longueur d'onde Raman coïncide avec la longueur d'onde de commande.

Ensuite le cristal non linéaire 3 peut être par exemple du AgGaSe₂ dont les propriétés de dispersion des indices ordinaires et extraordinaires et de phase à 1,064 $\mu$m. Par contre la disponibilité de sources de pompe vers 1,5 $\mu$m permet de réaliser avec ce type de cristal une source accordable allant de 1,5 $\mu$m à 10 $\mu$m, puisque les conditions d'accord de phase peuvent être obtenues à partir de 1,5 $\mu$m.

L'emploi d'un laser Nd : YAG en qualité d'onde de pompe, d'une cellule Raman (CH₄) et d'un oscillateur paramétrique à base de AgGaSe₂ représente une configuration adaptée pour réaliser une source accordable à très large bande.

Une telle source vient étendre le domaine d'emploi du laser Nd : YAG et sa versatilité. Ce type de matériau permet de réaliser à partir d'une même source optique de puissance :

- un laser à 1,064 μm

- un émetteur à 1,543 μm en associant une cellule Raman

- une source accordable couvrant le domaine de 1,8 -10 μm en pompant un oscillateur paramétrique à base d'un cristal de type chalcopyrite (AgGaSe$_2$).

Selon l'invention, on a donc pu obtenir, à partir du couplage d'une onde optique émise selon un processus Raman avec un milieu 3 dont la susceptibilité non linéaire d'ordre 2 n'est pas nulle, une onde de sortie de longueur d'onde réglable et différente de l'onde fournie par processus RAMAN. Dans ce cas, il est entre autre possible d'induire dans ce milieu 3 une polarisation non linéaire dans laquelle peuvent se développer des opérations de mélange de fréquences. En particulier, à partir d'une onde de pompe $\lambda_p$, on obtient deux ondes aux longueurs d'ondes $\lambda_s$ et $\lambda_i$ satisfaisant aux conditions d'accord de phase :

$$K_p - K_s - K_i = 0$$

$K_j$ représentant le vecteur d'onde $\lambda_j$ avec $K_j = 2\pi n_j$ $/\lambda_j$.

Dans ce cas, il est possible d'ajuster le domaine spectral sur lequel peuvent se développer les effets non linéaires en modifiant ou en sélectionnant la longueur d'onde de pompe.

Pour un cristal présentant une fenêtre de transmission large, un fort coefficient non linéaire et des possibilités d'accord de phases étendues, le domaine spectral couvert par le processus non linéaire sera d'autant plus grand que l'onde de pompe sera localisée dans le domaine des courtes longueurs d'ondes.

Il est bien évident que la description qui précède n'a été faite qu'à titre d'exemple non limitatif et que d'autres variantes peuvent être envisagées sans sortir du cadre de l'invention. Les exemples numériques et la nature des matériaux indiqués n'ont été fournis que pour illustrer la description.

## Revendications

1. Source laser de puissance, caractérisée en ce qu'elle comporte :

- une source laser de pompe (1) émettant une onde de pompe optique (F$_p$) d'une première longueur d'onde déterminée ;

- une cellule à gaz sous pression (2) contenant un gaz de nature telle que, recevant l'onde de pompe (F$_p$), la cellule émette une onde Stokes (F$_R$) à une deuxième longueur d'onde différente de la première longueur d'onde ;

- un cristal non linéaire (3) recevant l'onde Stokes (F$_R$) sous un angle déterminé par rapport à l'axe optique du cristal (3) qui fournit en échange deux ondes de sortie (F$_s$, F$_i$) de longueurs d'ondes différentes de la deuxième longueur d'onde.

2. Source laser de puissance selon la revendication 1, caractérisée en ce qu'elle comporte également une source laser de commande (4) émettant une onde de commande (F$_c$) de longueur d'onde sensiblement égale à la deuxième longueur et transmise à cellule à gaz sous pression (2) de façon sensiblement colinéaire avec l'onde de pompe (F$_p$).

3. Source laser de puissance selon la revendication 1, caractérisée en ce que la source laser de pompe (1) est un premier laser pompé par une première diode laser.

4. Source laser de puissance selon la revendication 2, caractérisée en ce que la source laser de commande (4) est un deuxième laser à (41) pompé par une deuxième diode laser (40).

5. Source laser de puissance selon la revendication 1, caractérisée en ce que l'angle déterminé sous lequel le cristal non linéaire (3) reçoit l'onde Stokes par rapport à l'axe optique est réglable ce qui permet de régler les longueurs d'onde des ondes de sortie (F$_s$, F$_i$).

6. Source laser de puissance selon la revendication 3, caractérisée en ce que le premier laser (11) est un grenat d'Yttrium dopé Néodyme (Nd : YAG).

7. Source laser de puissance selon la revendication 1, caractérisée en ce que la source laser de pompe (1) et la cellule à gaz (2) sont comprises dans une cavité optique délimitée par un premier miroir (M1) et un deuxième miroir (M2).

8. Source laser de puissance selon la revendication 1, caractérisée en ce que le cristal non linéaire (3) est compris dans une cavité optique délimitée par un troisième miroir (M3) et un quatrième miroir (M4).

9. Source laser de puissance selon la revendication 1, caractérisée en ce que :

- la source laser de pompe (1) est un laser du type Nd: YAG;

- la cellule Raman contient du méthane (CH$_4$) sous pression ;

- le cristal non linéaire (3) du type chalcopyrite (AgGaSe$_2$).

# FIG_1

FIG_2

$\lambda_{p_1} = 1\,064\,\mu m$

$\lambda_{s_1} = \lambda_{p_2} = 1.543169\,um$

FIG_3

FIG_4

FIG_5

EP 0 408 406 A1

Office européen
des brevets

RAPPORT DE RECHERCHE EUROPEENNE

Numero de la demande

EP 90 40 1678

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | SOVIET JOURNAL OF QUANTUM ELECTRONICS, vol. 18, no. 8, août 1988, pages 1035-1037, American Institute of Physics, New York, US; R.R. BUZYALIS et al.: "Parametric generation of tunable picosecond light pulses as a result of pumping with radiation from a stimulated Raman scattering compressor" * Abrégé; page 1036, colonne 1, lignes 3-23; colonne 2, lignes 40-47 * | 1,3,6 | H 01 S 3/30 G 02 F 1/39 |
| X | IEEE JOURNAL OF QUANTUM ELECTRONICS, vol. QE-18, no. 8, août 1988, pages 1246-1252, IEEE, New York, US; D.G. BRUNS et al.: "Scalable visible Nd: YAG pumped Raman laser source" * Page 1247, colonne 1, lignes 23-28 * | 1,3,6 | |
| X | US-A-4 327 337  (Y.S. LIU) * Colonne 4, lignes 16-42 * | 1,7,8 | |
| A | LASER UND OPTOELEKTRONIK, vol. 18, no. 4, décembre 1986, pages 311-318, Stuttgart, DE; A. SEILMEIER et al.: "Tunable picosecond light pulses generated by parametric three-photon interaction" * Abrégé; page 314, colonne 1, lignes 9-12,30-32; colonne 2, lignes 19-23 * | 1,5,9 | DOMAINES TECHNIQUES RECHERCHES (Int. Cl.5) H 01 S G 02 F |
| A | FR-A-2 438 358  (US DEPARTMENT OF ENERGY) * Page 2, lignes 9-21 *               -/- | 1,2 | |

Le présent rapport a été établi pour toutes les revendications

| Lieu de la recherche | Date d'achèvement de la recherche | Examinateur |
|---|---|---|
| LA HAYE | 22-10-1990 | GALANTI M. |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | APPLIED PHYSICS LETTERS, vol. 49, no. 11, 15 septembre 1986, pages 608-610, American Institute of Physics, New York, US; R.C. ECKARDT et al.: "Broadly tunable infrared parametric oscillator using AgGaSe2" * Abrégé * ----- | 1,9 | |

**DOMAINES TECHNIQUES RECHERCHES (Int. Cl.5)**

Le présent rapport a été établi pour toutes les revendications

| Lieu de la recherche | Date d'achèvement de la recherche | Examinateur |
|---|---|---|
| LA HAYE | 22-10-1990 | GALANTI M. |